# EUROPEAN PATENT SPECIFICATION

(11) **EP 4 290 664 B1**
(45) Date of publication and mention of the grant of the patent: **11.03.2026**
(21) Application number: 22849862.2
(22) Date of filing: 26.07.2022
(51) Int. Cl.: H01M 50/358, H01M 50/375, H01M 50/251

(54) **BATTERY RACK AND ENERGY STORAGE SYSTEM COMPRISING THE BATTERY RACK**
BATTERIEGESTELL UND ENERGIESPEICHERSYSTEM MIT DEM BATTERIEGESTELL
SUPPORT DE BATTERIES ET SYSTÈME DE STOCKAGE D'ÉNERGIE COMPRENANT LE SUPPORT DE BATTERIES

(30) Priority: 26.07.2021 KR 20210098142
(43) Date of publication of application: 13.12.2023
(60) Divisional application: 26153281.6
(73) Proprietor: LG ENERGY SOLUTION, LTD., Seoul 07335 (KR)
(72) Inventor: KIM, Seung-Hyun, Daejeon 34122 (KR); OH, Young-Hoo, Daejeon 34122 (KR); OK, Seung-Min, Daejeon 34122 (KR); JO, Sang-Hyun, Daejeon 34122 (KR); CHO, Young-Bum, Daejeon 34122 (KR); HONG, Sung-Goen, Daejeon 34122 (KR)
(74) Representative: Plasseraud IP
(86) International application number: PCT/KR2022/010988
(87) International publication number: WO 2023/008886

(56) References cited:
- WO-A1-02/27817
- CN-A- 112 531 246
- JP-A- 2012 212 659
- KR-A- 20180 006 150
- KR-A- 20190 022 485
- KR-A- 20210 056 268
- US-A1- 2005 084 748
- US-A1- 2013 017 428

## Description

### TECHNICAL FIELD

The present disclosure relates to a battery rack and san energy storage system comprising the same.

The present application claims priority to Korean Patent Application No. 10-2021-0098142 filed on July 26, 2021 in the Republic of Korea.

### BACKGROUND ART

Due to their characteristics of being easily applicable to various products and electrical properties such as high energy density, secondary batteries are not only commonly applied to portable devices, but universally applied to electric vehicles (EVs) or hybrid electric vehicles (HEVs) that are driven by an electrical driving source. In addition to the primary advantage that it is possible to remarkably reduce the use of fossil fuels, secondary batteries do not produce by-products from the use of energy, so they are gaining attention as a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. A unit secondary battery cell, i.e., a unit battery cell has an operating voltage of about 2.5V to 4.5V. Accordingly, when a higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack may be variously set depending on the required output voltage or charge/discharge capacity.

Meanwhile, when fabricating the battery pack by connecting the plurality of battery cells in series/in parallel, it is general to make a battery module including at least one battery cell, and then fabricate a battery pack or a battery rack using at least one battery module with an addition of any other component.

In general, the conventional battery rack includes a plurality of battery modules stacked on top of each other and a rack case accommodating the plurality of battery modules. The conventional plurality of battery modules has venting holes through which vent gas vented from at least one battery cell in which an abnormal situation occurred is escaped to the atmosphere when a fire occurs due to overheat of the battery cell.

However, the conventional battery rack has a high risk that a fire will occur due to unintentional flaring or ignition when the vent gas is vented to the atmosphere and then mixed with outdoor air and enters an ignition risk zone.

Accordingly, there is a need for an approach to prevent the flaring or ignition caused by the vent gas vented from the battery module in the abnormal situation.

Document US 2013/0017428 A1 discloses a battery rack, comprising a plurality of battery modules, each including at least one battery cell and having a top face with a central opening and a bottom face with a central opening. The battery rack has a rack case accommodating the plurality of battery modules, the rack case having first ducts on which the battery modules bottom faces rest and second ducts covering the top faces of the battery modules, such ducts having openings in correspondence with the openings in the top and bottom faces of the battery modules.

### DISCLOSURE

### Technical Problem

The present disclosure is directed to providing a battery rack for preventing flaring or ignition caused by vent gas vented from a battery module in the event of an abnormal situation and an energy storage system comprising the same.

### Technical Solution

To solve the above-described problem, the present disclosure provides a battery rack according to claim 1.

In realization modes:
The rack case may include a venting channel in communication with the guide channels of the plurality of support brackets.

The at least one guide hole may be disposed at a location corresponding to the at least one venting hole when each battery module is mounted on the support bracket.

A barrier membrane may be disposed in the at least one guide hole to open or close the at least one guide hole according to a predetermined temperature.

The barrier membrane may melt or tear at the predetermined temperature or above to make the at least one guide hole and the at least one venting hole communicate with each other.

The barrier membrane may be a plastic membrane having a predetermined thickness.

The plurality of battery modules may be stacked on top of each other along a vertical direction of the rack case, and the plurality of support brackets may be disposed between the plurality of battery modules in the vertical direction of the rack case.

Additionally, the present disclosure provides an energy storage system including at least one battery rack according to the above-described embodiments.

### Advantageous Effects

According to the above-described various embodiments, it is possible to provide a battery rack for preventing flaring or ignition caused by vent gas vented from a battery module in the event of an abnormal situation and an energy storage system comprising the same.

### DESCRIPTION OF DRAWINGS

The accompanying drawings illustrate an exemplary embodiment of the present disclosure and together with the following detailed description, serve to provide further understanding of the technical features of the present disclosure, and thus the present disclosure is not construed as being limited to the drawings.
FIG. 1 is a diagram illustrating a battery rack according to an embodiment of the present disclosure.
FIG. 2 is a front view of the battery rack of FIG. 1.
FIG. 3 is a side cross-sectional view of a battery pack of FIG. 1.
FIG. 4 is a diagram illustrating the assembly between a battery module and a support bracket of the battery rack of FIG. 1.
FIG. 5 is a diagram illustrating a support bracket of the battery rack of FIG. 1.
FIG. 6 is a diagram illustrating a support bracket according to another embodiment of the battery rack of FIG. 1.
FIGS. 7 and 8 are diagrams illustrating the mechanism for preventing flaring or ignition by rerouting vent gas generated from a battery module of the battery rack of FIG. 1.
FIG. 9 is a diagram illustrating an energy storage system according to an embodiment of the present disclosure.

### BEST MODE

The present disclosure will become apparent by describing exemplary embodiments of the present disclosure in detail with reference to the accompanying drawings. The disclosed embodiments are provided by way of illustration to help the understanding of the present disclosure, and it should be understood that the present disclosure may be embodied in many other forms. Additionally, to help the understanding of the present disclosure, some elements in the accompanying drawings may be depicted on an exaggerated scale, not the actual scale.

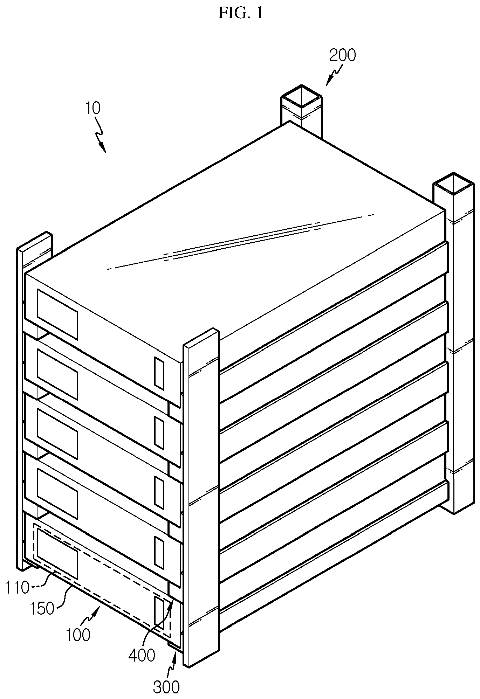

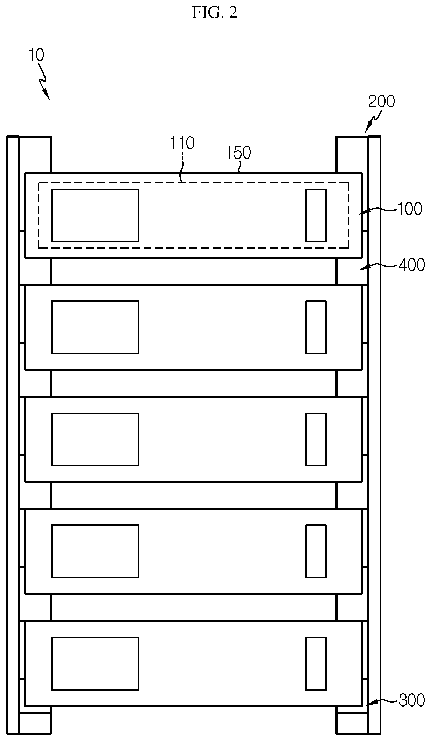

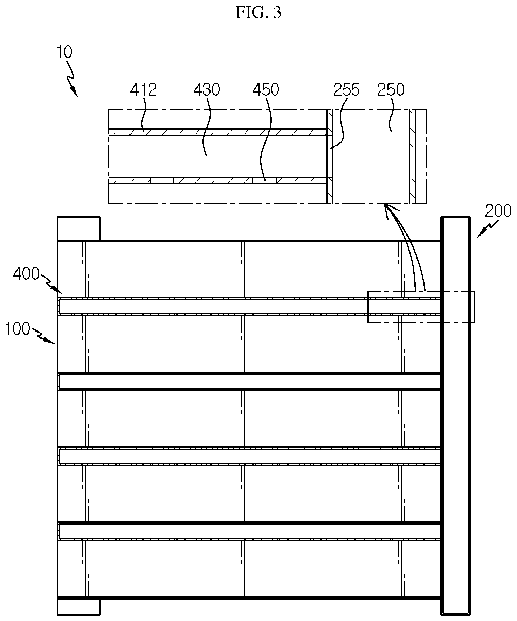

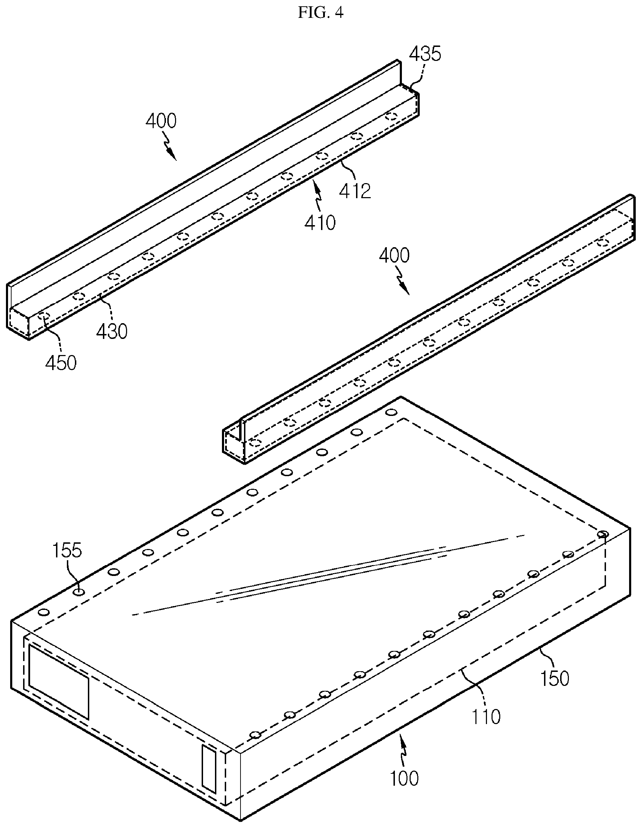

FIG. 1 is a diagram illustrating a battery rack according to an embodiment of the present disclosure, FIG. 2 is a front view of the battery rack of FIG. 1, FIG. 3 is a side cross-sectional view of a battery pack of FIG. 1, and FIG. 4 is a diagram illustrating the coupling between a battery module and a support bracket of the battery rack of FIG. 1.

Referring to FIGS. 1 to 4, the battery rack 10 includes a battery module 100, a rack case 200 and a support bracket 400.

A plurality of battery modules 100 may be included. The plurality of battery modules 100 may be stacked on top of each other along the vertical direction of the rack case 200 as described below.

Each of the plurality of battery modules 100 may include a battery cell 110 and a module case 150.

The battery cell 110 may be a secondary battery, for example, a pouch type secondary battery, a prismatic se4codnary battery or a cylindrical secondary battery. Hereinafter, this embodiment is described by taking the pouch type secondary battery as an example of the battery cell 110.

One or more battery cells 110 may be included. The plurality of battery cells 110 may be stacked such that they are electrically connected to each other.

The module case 150 may accommodate one or more battery cells 110. To this end, the module case 150 may have an accommodation space in which one or more battery cells 110 are received.

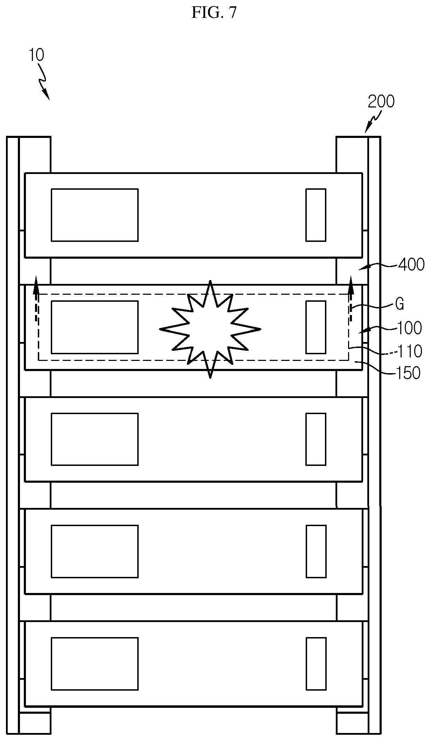

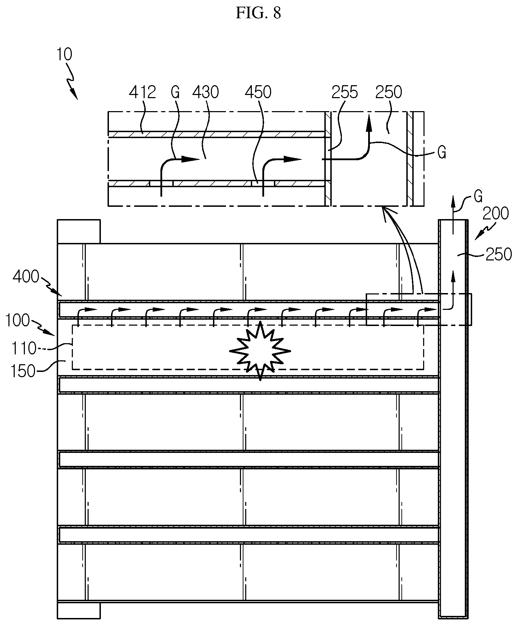

The module case 150 has a venting hole 155 through which vent gas G (see FIGS. 7 and 8) vented from the battery cell 110 is vented to the atmosphere in the event of an abnormal situation such as overheat of one or more battery cells 110.

One or more venting holes 155 may be included. Hereinafter, this embodiment is described based on the plurality of venting holes 155.

The plurality of venting holes 155 are disposed in the upper surface of the module case 150. Specifically, the plurality of venting holes 155 are disposed at two edges of the upper surface of the module case 150 in the lengthwise direction of the module case 150.

The venting holes 155 at each of the two edges of the upper surface may be arranged spaced a predetermined distance apart along the lengthwise direction of the module case 150.

The plurality of venting holes 155 may be disposed at locations corresponding to guide holes 450 of the support bracket 400 as described below. Specifically, in the assembly of the battery module 100 and the support bracket 400 as described below, the plurality of venting holes 155 may be in communication with the guide holes 450 of the support bracket 400 as described below.

The rack case 200 may accommodate the plurality of battery modules 100. To this end, the rack case 200 may have a predetermined length along the vertical direction of the plurality of battery modules 100, i.e., the heightwise direction.

Furthermore, a plurality of rack cases 200 may be included to support the plurality of battery modules 100 together with a base bracket 300 and the support bracket 400 as described below.

The rack case 200 may include a venting channel 250 in communication with guide channels 430 of the plurality of support brackets 400 as described below. The venting channel 250 may be disposed on the inner surface of the rack case 200, and may be formed along the lengthwise direction of the rack case 200, i.e., the heightwise direction. The venting channel 250 may be integrally formed in the rack case 200.

The venting channel 250 may be used to guide the route of the vent gas G (see FIGS. 7 and 8) to a predetermined location, and may guide the vent gas G to the predetermined location for preventing a fire or ignition caused by the vent gas G.

Specifically, the venting channel 250 may guide the vent gas G to a location for avoiding an ignition risk zone where the vent gas G is mixed with outdoor air and ignition is highly likely to occur, a location for delaying ignition to the maximum extent or a location for minimizing damage to a user in the event of ignition.

For example, the venting channel 250 may be disposed in the rack case 200 at the rear of the battery modules 100. The venting channel 250 may guide the vent gas G from the battery modules 100 to the top rear side of the rack case 200.

Here, the exposed opening of the venting channel 250 may be connected to an additional instrument such as an ignition prevention device to prevent the ignition. That is, the venting channel 250 may be configured to guide the vent gas G to a preset route for preventing or delaying the ignition. To this end, the venting channel 250 may be in communication with the guide channels 430 of the plurality of support brackets 400 as described below.

The venting channel 250 may have a plurality of channel holes 255.

The plurality of channel holes 255 may be arranged spaced a predetermined distance apart along the lengthwise direction of the venting channel 250, i.e., the heightwise direction, and may be connected in communication with channel connection holes 435 of the guide channels 430 of the support brackets 400 as described below.

The battery rack 10 may further include the base bracket 300.

The base bracket 300 may be configured to support the battery modules 100 and reinforce the strength of the rack case 200, and may be coupled to the rack case 200.

The base bracket 300 may be disposed on bottom of the bottommost battery module 100 among the plurality of battery modules 100 in the heightwise direction of the rack case 200.

A plurality of support brackets 400 may be included. The plurality of support brackets 400 may be disposed between the plurality of battery modules 100 in the vertical direction of the rack case 200, i.e., the heightwise direction.

The plurality of support brackets 400 may be arranged spaced a predetermined distance apart in the heightwise direction of the rack case 200 to increase the cooling performance of the plurality of battery modules 100.

The plurality of support brackets 400 may be disposed in the rack case 200 such that each support bracket 400 supports each battery module 100, and may be in communication with the at least one venting hole 155.

Furthermore, the plurality of support brackets 400 may be also in communication with the venting channel 250 of the rack case 200 to guide the vent gas G (see FIGS. 7 and 8) coming from the at least one venting hole 155 to the venting channel 250 of the rack case 200.

Hereinafter, the plurality of support brackets 400 will be described in more detail.

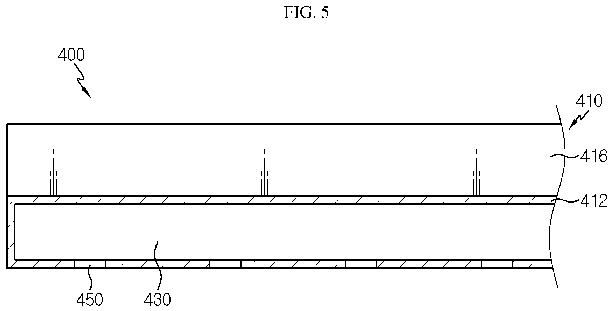

FIG. 5 is a diagram illustrating the support bracket of the battery rack of FIG. 1.

Referring to FIG. 5 together with FIGS. 1 to 4, each of the plurality of support brackets 400 includes a bracket body 410, the guide channel 430 and the guide hole 450.

The bracket body 410 forms the exterior of the support bracket 400, and includes a main body 412 and an auxiliary body 416.

The main body 412 may be disposed between the battery modules 100 in the vertical direction of the rack case 200, i.e., the heightwise direction. The main body 412 supports the top and bottom of the battery modules 100.

The guide channel 430 as described below may be disposed in the main body 412. Furthermore, one or more guide holes 450 in communication with the guide channel 430 as described below may be disposed on bottom of the main body 412.

The auxiliary body 416 extendeds from the main body 412, and may be disposed between the battery module 100 and the rack case 200. The auxiliary body 416 may support two sides of the battery module 100.

The guide channel 430 may be disposed in the main body 412, and may have a predetermined length along the lengthwise direction of the main body 412. The guide channel 430 may guide the flow route of the vent gas G (see FIGS. 7 and 8) vented from one or more venting holes 155. The channel connection holes 435 for communication with the channel holes 255 of the venting channel 250 may be disposed at the end of the guide channel 430.

The guide hole 450 may be disposed on bottom of the guide channel 430, and may be in communication with the at least one venting hole 155. One or more guide holes 450 may be included. For example, the number of guide holes 450 may correspond to the number of venting holes 155.

When each battery module is mounted on the support bracket 400, one or more guide holes 450 may be disposed at a location corresponding to the at least one venting hole 155.

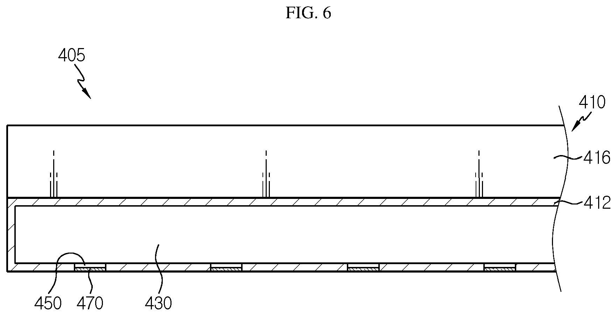

FIG. 6 is a diagram illustrating a support bracket according to another embodiment of the battery rack of FIG. 1.

The support bracket 405 according to this embodiment is similar to the support bracket 400 of the previous embodiment, and overlapping descriptions of some components that are substantially identical or similar to the previous embodiment are omitted and the following description is made based on difference(s) between this embodiment and the previous embodiment.

Referring to FIG. 6, the support bracket 405 may include a bracket body 410, a guide channel 430, a guide hole 450 and a barrier membrane 470.

The bracket body 410, the guide channel 430 and the guide hole 450 are substantially identical or similar to the previous embodiment, and overlapping descriptions are omitted.

The barrier membrane 470 may be disposed in the one or more guide holes 450, and may open or close the one or more guide holes 450 according to a predetermined temperature.

The barrier membrane 470 may melt or tear at the predetermined temperature or above to make the one or more guide holes 450 and the one or more venting holes 155 communicate with each other. To this end, the barrier membrane 470 may be a plastic membrane having a predetermined thickness that melts at the predetermined temperature or above.

In this embodiment, when the battery module 100 is overheated due to the abnormal situation, the barrier membrane 470 melts to make the venting hole 155 and the guide hole 450 communicate with each other so as to guide the flow of the vent gas.

Additionally, in this embodiment, in a normal situation, not the abnormal situation, the barrier membrane 470 may prevent moisture or impurities from entering the venting hole 155 through the guide hole 450.

Furthermore, in this embodiment, the barrier membrane 470 may prevent high temperature outdoor air that may enter through the guide hole 450 from entering the venting hole 155, thereby ensuring the cooling performance of the battery module 100 in the normal situation.

Accordingly, when the battery module 100 is in normal operation, the barrier membrane 470 may close the guide hole 450, thereby effectively preventing damage of the battery module 100 or the cooling performance degradation of the battery module 100 due to the moisture or impurities, and in the abnormal situation of the battery module 100, the barrier membrane 470 may be opened to make the guide hole 450 and the venting hole 155 communicate with each other, thereby effectively guiding the vent gas to the guide channel 430.

Hereinafter, the mechanism for preventing flaring or ignition by rerouting the vent gas generated from the battery module 100 of the battery rack 10 according to this embodiment will be described in more detail.

FIGS. 7 and 8 are diagrams illustrating the mechanism for preventing flaring or ignition by rerouting the vent gas generated from the battery module of the battery rack of FIG. 1.

Referring to FIGS. 7 and 8, at least one battery module 100 of the battery rack 10 may be overheated due to the abnormal situation. The abnormal situation may lead to a dangerous situation such as thermal runaway of the battery module 100. When the battery module 100 is overheated, the vent gas G from the overheated battery cell 110 in the battery module 100 may be vented through the venting hole 155.

In the case of the conventional battery rack, the vent gas G is vented toward the front and rear sides of the battery module 100, and when the vent gas G is immediately mixed with outdoor air and enters an ignition risk zone, unintentional flames occurs, causing a bigger danger.

In this embodiment, the vent gas G may enter the guide channel 430 through the guide hole 450 of the support bracket 400 in communication with the battery module 100, and subsequently, the vent gas G may be guided to the venting channel 250 of the rack case 200 along the guide channel 430.

Subsequently, the vent gas G may exit the rack case 200 through the venting channel 250 of the rack case 200, or may be guided by the additional instrument such as the ignition prevention device connected to the venting channel 250 of the rack case 200.

In this embodiment, the vent gas G may be guided to a location away from the battery modules 100 through the guide channel 430 of the support bracket 400 and the venting channel 250 of the rack case 200, thereby significantly reducing the likelihood that unintentional flames occur compared to the case in which the vent gas G is directly vented toward the front and rear sides of the battery module 100.

Accordingly, in this embodiment, it is possible to guide the route of the vent gas G to minimize the unintended flaring risk caused by the vent gas G, thereby effectively preventing the risk of thermal runaway or explosion to all the battery modules 100 of the battery rack 10.

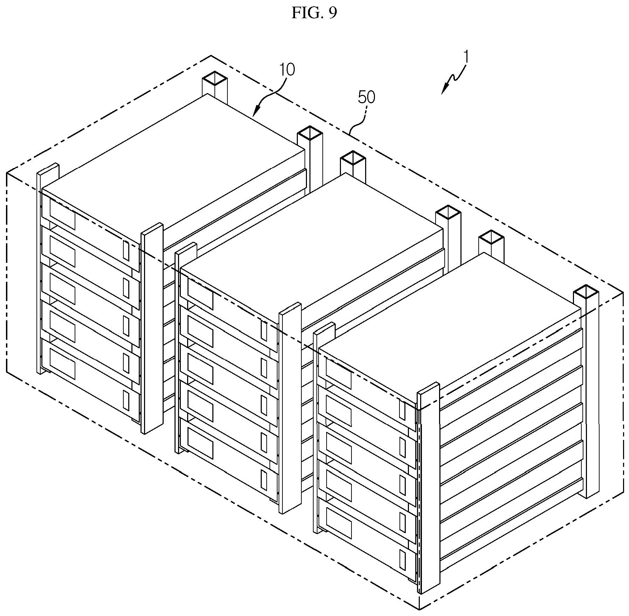

FIG. 9 is a diagram illustrating an energy storage system according to an embodiment of the present disclosure.

Referring to FIG. 9, the energy storage system 1 may be used in the domestic or industrial applications as an energy source. The energy storage system 1 may include at least one battery rack 10 and a rack container 50 accommodating the at least one battery rack 10.

Since the energy storage system 1 according to this embodiment includes the battery rack 10 of the previous embodiment, the energy storage system 1 may include all the advantages of the battery rack 10 of the previous embodiment.

According to the above-described various embodiments, it is possible to provide the battery rack 10 for preventing flaring or ignition caused by the vent gas G vented from the battery module 100 in the abnormal situation and the energy storage system 1 including the same.

While an exemplary embodiment of the present disclosure has been hereinabove illustrated and described, the present disclosure is not limited to the above-described particular embodiment and it is obvious to those skilled in the art that a variety of modifications and changes may be made thereto without departing from the claimed subject matter of the present disclosure in the appended claims, and such modifications and changes should not be individually understood from the technical aspects or features of the present disclosure.

## Claims

1. A battery rack (10), comprising :
- a plurality of battery modules (100), each including at least one battery cell (110), wherein each battery module (110) has a plurality of venting holes (155) disposed in an upper surface of a module case (150) of the battery module (100) at two edges of the upper surface of the module case (150) in a lengthwise direction of the module case (150);
- a rack case (200) accommodating the plurality of battery modules (100); and
- a plurality of support brackets (400) disposed in the rack case such that each support bracket (400) supports each battery module (100) and is in communication with the plurality of venting holes, wherein each of the plurality of support brackets includes
- a bracket body (410) forming the exterior of the support bracket (400) and including
∘ a main body (412) supporting the top and bottom of the battery
modules (100), and
∘ an auxiliary body (416) extending from the main body (412),
- a guide channel (430) to guide a flow route of vent gas vented from the plurality of venting holes, and
- a plurality of guide holes (450) included in the guide channel (430) and in communication with the plurality of venting holes.

2. The battery rack according to claim 1, wherein the rack case includes a venting channel (250) in communication with the guide channels (430) of the plurality of support brackets (400).

3. The battery rack according to claim 1, wherein the plurality of guide holes is disposed at a location corresponding to the plurality of venting holes when each battery module is mounted on the support bracket.

4. The battery rack according to claim 1, wherein a barrier membrane (470) is disposed in each of the plurality of guide holes (450) to open or close the plurality of guide holes (450) according to a predetermined temperature.

5. The battery rack according to claim 4, wherein the barrier membrane (470) melts or tears at the predetermined temperature or above to make the plurality of guide holes (450) and the plurality of venting holes (155) communicate with each other.

6. The battery rack according to claim 4, wherein the barrier membrane (470) is a plastic membrane having a predetermined thickness.

7. The battery rack according to claim 1, wherein the plurality of battery modules (100) is stacked on top of each other along a vertical direction of the rack case (200), and
wherein the plurality of support brackets (400) is disposed between the plurality of battery modules (100) in the vertical direction of the rack case (200).

8. An energy storage system comprising at least one battery rack (10) according to claim 1.

## Patentansprüche

1. Batteriegestell (10), umfassend:
- eine Mehrzahl von Batteriemodulen (100), welche jeweils wenigstens eine Batteriezelle (110) umfassen, wobei jedes Batteriemodul (110) eine Mehrzahl von Entlüftungslöchern (155) aufweist, welche in einer oberen Fläche eines Modulgehäuses (150) des Batteriemoduls (100) an zwei Rändern der oberen Fläche des Modulgehäuses (150) in einer Längsrichtung des Modulgehäuses (150) angeordnet sind;
- ein Gestellgehäuse (200), welches die Mehrzahl von Batteriemodulen (100) aufnimmt; und
- eine Mehrzahl von Stützhalterungen (400), welche derart in dem Gestellgehäuse angeordnet sind, dass jede Stützhalterung (400) jedes Batteriemodul (100) haltert und mit der Mehrzahl von Entlüftungslöchern in Verbindung steht,
wobei jede der Mehrzahl von Stützhalterungen umfasst:
- einen Halterungskörper (410), welcher das Äußere der Stützhalterung (400) bildet und umfasst:
∘ einen Hauptkörper (412), welcher die Oberseite und die Unterseite der Batteriemodule (100) haltert, und
∘ einen Hilfskörper (416), welcher sich von dem Hauptkörper (412) erstreckt,
- einen Führungskanal (430) zum Führen eines Strömungswegs von aus der Mehrzahl von Entlüftungslöchern entlüftetem Entlüftungsgas und
- eine Mehrzahl von Führungslöchern (450), welche in dem Führungskanal (430) umfasst sind und mit der Mehrzahl von Entlüftungslöchern in Verbindung stehen.

2. Batteriegestell nach Anspruch 1, wobei das Gestellgehäuse einen Entlüftungskanal (250) umfasst, welcher mit den Führungskanälen (430) der Mehrzahl von Stützhalterungen (400) in Verbindung steht.

3. Batteriegestell nach Anspruch 1, wobei die Mehrzahl von Führungslöchern an einer Stelle angeordnet ist, welche der Mehrzahl von Entlüftungslöchern entspricht, wenn jedes Batteriemodul an der Stützhalterung montiert ist.

4. Batteriegestell nach Anspruch 1, wobei eine Barrieremembran (470) in jedem der Mehrzahl von Führungslöchern (450) angeordnet ist, um die Mehrzahl von Führungslöchern (450) gemäß einer vorbestimmten Temperatur zu öffnen oder zu schließen.

5. Batteriegestell nach Anspruch 4, wobei die Barrieremembran (470) bei der vorbestimmten Temperatur oder darüber schmilzt oder reißt, um die Mehrzahl von Führungslöchern (450) und die Mehrzahl von Entlüftungslöchern (155) miteinander in Verbindung zu bringen.

6. Batteriegestell nach Anspruch 4, wobei die Barrieremembran (470) eine Kunststoffmembran ist, welche eine vorbestimmte Dicke aufweist.

7. Batteriegestell nach Anspruch 1, wobei die Mehrzahl von Batteriemodulen (100) entlang einer vertikalen Richtung des Gestellgehäuses (200) übereinander gestapelt ist und
wobei die Mehrzahl von Stützhalterungen (400) in der vertikalen Richtung des Gestellgehäuses (200) zwischen der Mehrzahl von Batteriemodulen (100) angeordnet ist.

8. Energiespeichersystem, umfassend wenigstens ein Batteriegestell (10) nach Anspruch 1.

## Revendications

1. Bâti de batterie (10), comprenant :
- une pluralité de modules de batterie (100), comportant chacun au moins une cellule de batterie (110), dans lequel chaque module de batterie (110) présente une pluralité de trous de ventilation (155) disposée dans une surface supérieure d'un boîtier de module (150) du module de batterie (100) sur deux bords de la surface supérieure du boîtier de module (150) dans une direction longitudinale du boîtier de module (150) ;
- un boîtier de bâti (200) accueillant la pluralité de modules de batterie (100) ; et
- une pluralité de consoles de support (400) disposée dans le boîtier de bâti de sorte que chaque console de support (400) supporte chaque module de batterie (100) et soit en communication avec la pluralité de trous de ventilation,
dans lequel chacune de la pluralité de consoles de support comporte
- un corps de console (410) formant l'extérieur de la console de support (400) et comportant
∘ un corps principal (412) supportant les parties inférieure et supérieure des modules de batterie (100), et
∘ un corps auxiliaire (416) s'étendant à partir du corps principal (412),
- un canal de guidage (430) destiné à guider une voie d'écoulement d'un gaz de ventilation évacué par la pluralité de trous de ventilation, et
- une pluralité de trous de guidage (450) incluse dans le canal de guidage (430) et en communication avec la pluralité de trous de ventilation.

2. Bâti de batterie selon la revendication 1, dans lequel le boîtier de bâti comporte un canal de ventilation (250) en communication avec les canaux de guidage (430) de la pluralité de consoles de support (400).

3. Bâti de batterie selon la revendication 1, dans lequel la pluralité de trous de guidage est disposée à un emplacement correspondant à la pluralité de trous de ventilation lorsque chaque module de batterie est monté sur la console de support.

4. Bâti de batterie selon la revendication 1, dans lequel une membrane barrière (470) est disposée dans chacun de la pluralité de trous de guidage (450) pour ouvrir ou fermer la pluralité de trous de guidage (450) selon une température prédéterminée.

5. Bâti de batterie selon la revendication 4, dans lequel la membrane barrière (470) fond ou se déchire à la température prédéterminée ou à une température supérieure pour faire communiquer entre elles la pluralité de trous de guidage (450) et la pluralité de trous de ventilation (155).

6. Bâti de batterie selon la revendication 4, dans lequel la membrane barrière (470) est une membrane plastique ayant une épaisseur prédéterminée.

7. Bâti de batterie selon la revendication 1, dans lequel la pluralité de modules de batterie (100) sont empilés les uns sur les autres le long d'une direction verticale du boîtier de bâti (200), et
dans lequel la pluralité de consoles de support (400) est disposée entre la pluralité de modules de batterie (100) dans la direction verticale du boîtier de bâti (200).

8. Système de stockage d'énergie comprenant au moins un bâti de batterie (10) selon la revendication 1.
